Europäisches Patentamt

(19) European Patent Office

Office européen des brevets

(11) Numéro de publication: **0 179 001**

**A2**

(12) **DEMANDE DE BREVET EUROPEEN**

(21) Numéro de dépôt: **85402037.7**

(22) Date de dépôt: **21.10.85**

(51) Int. Cl.⁴: **H 04 M 11/08**
**H 04 N 5/76, H 04 N 7/173**

(30) Priorité: **19.10.84 FR 8416077**
**19.03.85 FR 8504012**

(43) Date de publication de la demande:
**23.04.86 Bulletin 86/17**

(84) Etats contractants désignés:
**AT BE CH DE GB IT LI LU NL SE**

(71) Demandeur: **Muguet, Francis Fabien Michel**
**71, rue du Commerce**
**F-75015 Paris(FR)**

(72) Inventeur: **Muguet, Francis Fabien Michel**
**71, rue du Commerce**
**F-75015 Paris(FR)**

(74) Mandataire: **Jolly, Jean-Pierre et al,**
**Cabinet BROT et JOLLY 83, rue d'Amsterdam**
**F-75008 Paris(FR)**

(54) **Procédé et dispositif d'acquisition, de mémorisation et de transmission de données spécialisées, relatives notamment à l'enregistrement des émissions, entre un appareil de type magnétoscope et un centre de traitement.**

(57) L'invention concerne un dispositif d'acquisition et de transmission de données entre un magnétoscope et un centre serveur.

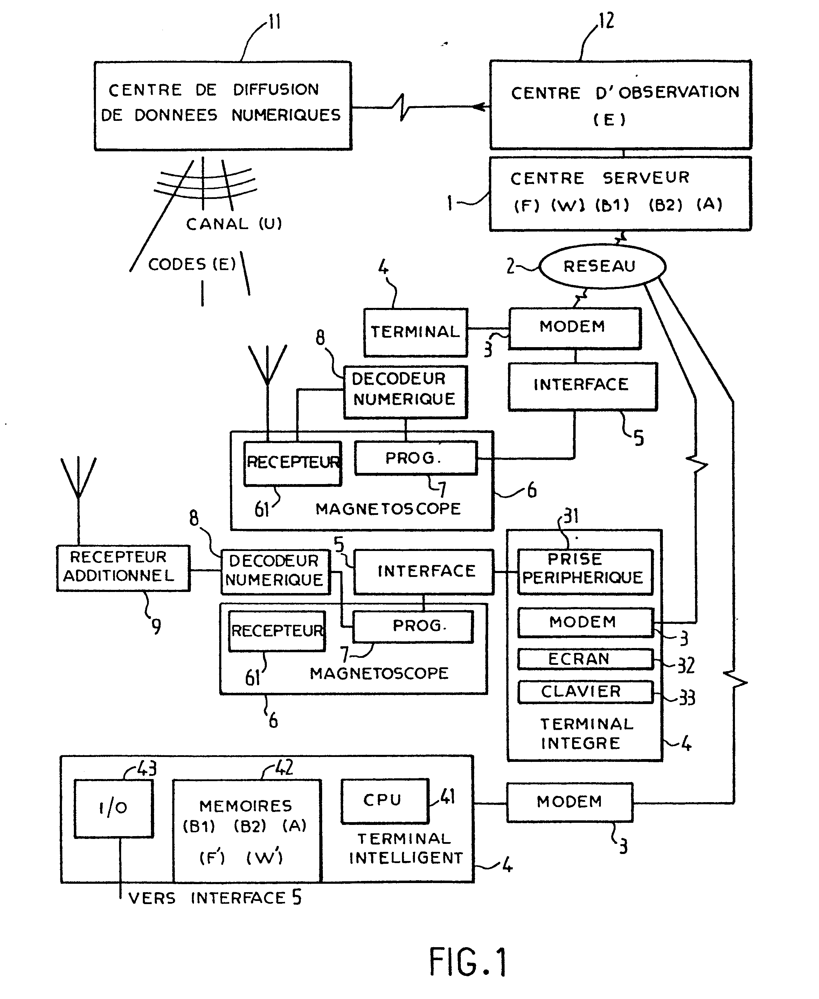

Ce dispositif comprend notamment un centre serveur (1), un réseau (2) de transmission de données, auquel est connecté un modem (3), relié d'une part, au programmateur (7) d'un magnétoscope (6) par une interface (5), et d'autre part, à un terminal (4) muni d'un écran et d'un clavier. Des codes spéciaux sont envoyés par le serveur (1) à l'interface (5) pour que le programmateur prévoit l'enregistrement des émissions que l'usager a sélectionnées. Le magnétoscope (6) possède un décodeur (8) de codes numériques. Les codes diffusés (E) relatifs au déclenchement en temps réel de l'enregistrement des émissions sont diffusés sur un canal (U) spécialisé par un centre de diffusion numérique (11). Figure 1.

Croydon Printing Company Ltd.

**0179001**

Procédé et dispositif d'acquisition et de transmission de données spécialisées relatives à l'enregistrement des émissions entre un appareil de type magnétoscope et un centre serveur

Actuellement, selon le procédé conventionnel de programmation d'un magnétoscope, l'utilisateur doit lire dans un magazine les heures, les chaînes, les titres et le résumé descriptif des émissions, ensuite l'usager doit taper au clavier de son magnétoscope les indications de chaînes, d'heures de début et de fin des émissions qu'il a choisies d'enregistrer. C'est procédé long, fastidieux, source d'erreurs et dont le résultat ne peut être précis, parce que les chaînes de télévision et de radio ne diffusent pas (diffusion aérienne ou par câble) leurs émissions en respectant les heures publiées dans la presse. C'est pourquoi l'usager doit effectuer sa programmation en prenant des marges de 5 à 10 minutes. De plus, le procédé conventionnel sera de moins en moins pratique avec la multiplication du nombre de chaînes de télévision (diffusion aérienne, par câble, par satellite), certaines chaînes possédant un temps local différent de celui de l'usager.

Le problème de l'aide à la programmation du magnétoscope et le problème de l'activation en temps réel du début et de la fin de l'enregistrement, doivent être considérés comme un tout, parce qu'il n'est pas possible de considérer un processus de programmation si on ne connaît pas comment l'enregistrement débute ou s'arrête, de même le magnétoscope ne peut commencer ou arrêter son enregistrement que s'il connaît à partir de quel paramètre il doit commencer ou s'arrêter.

Jusqu'à présent, plusieurs systèmes ont été proposés pour résoudre le problème général de programmer facilement et avec précision un magnétoscope.

- 2 -

**0179001**

En France, les laboratoires du CCETT (Centre Commun d'Etudes de Télédiffusion et de Télécommunication) ont proposé un système appelé EPEOS et maintenant MOISE (Messagerie de programmes Organisée par l'Identification des Sources et de leurs Emissions). Ce système fonctionne à l'aide d'un système ANTIOPE modifié. L'usager consulte un magazine diffusé ANTIOPE par chaque chaîne TV pour ses programmes. Sa diffusion est assurée par chaque chaîne TV dans son intervalle de suppression de trame. L'usager effectue un choix non interactif des émissions. Le protocole ANTIOPE et le terminal ANTIOPE sont modifiés de manière à permettre à l'usager de définir et d'adresser à l'intérieur de la messagerie ANTIOPE des sous-articles afférents respectivement à une émission. L'usager indique une émission choisie à l'aide d'un index qu'il positionne sur l'écran. Le système MOISE n'utilise pas un procédé de déclenchement "direct", il consiste notamment à diffuser 3 fois par seconde, deux articles, l'un décrivant l'émission en cours et l'autre, l'émission qui suit. Chaque article indique le mnémonique de l'émission ainsi que l'heure et la durée de l'émission. L'heure et la durée sont constamment remises à jour suivant l'exécution réelle des émissions. Ces deux articles sont des codes indirects de déclenchement au sens qu'ils permettent le déclenchement en temps réel de l'enregistrement. Dans le cadre de ce système, une synchronisation de l'horloge de l'organe (7) de programmation devient nécessaire. Le début et la fin de l'enregistrement sont activés suite à une comparaison des heures préalablement mises en mémoire, avec l'heure de l'organe de programmation (7). Les heures mises en mémoire peuvent être modifiées à l'aide des articles diffusés.

Un autre système : VPS (Video Programming System) a été proposé en RFA, et à l'inverse du système MOISE, il est entré en fonctionnement depuis Août 85. Le système consiste très succinctement et notamment à diffuser un label afférent à une émission pendant toute la durée de celle-ci, et si ce label correspond à un label d'une émission sélectionnée, il y a alors enregistrement. La diffusion numérique du label dure pendant toute la durée de l'émission et est effectuée sur la ligne 16. Au début les concepteurs de VPS avaient pensé assurer la saisie des labels, notamment à l'aide d'un lecteur de codes barres. Ces codes barres devaient être imprimés dans les journaux allemands, lesquels ont refusé. La solution finale fut alors de diffuser l'heure prévue de début de l'émission comme label. Si l'émission est en retard, alors VPS va diffuser l'heure prévue, avec un signal de préparation, jusqu'à ce que l'émission débute réellement.

Pour résoudre ces problèmes, la chaîne ARD/ZDF pense passer du système VPS au système VPV. Le VPV est un VPS auquel on a adjoint un système d'acquisition qui est une vidéographie CEEFAX. Il faut remarquer que les diffusions de données numériques CEEFAX et VPS ne sont pas compatibles.

Un système d'acquisition de données par l'intermédiaire d'une vidéographie diffusée a fait l'objet d'une publication (Rundfunkteckniche Mitteilungen, Vol. 26, 1982. Nov-Dec.: Videotext programmiert videorecorder, Hofman et al.). De par ses principes techniques et ses capacités, il est complètement différent du système selon l'invention qui utilise un réseau télématique. Les auteurs de cette publication pensent, ce qui est intéressant de noter, que seulement les chaînes de télévision peuvent résoudre le problème du début et arrêt en temps réel de l'enregistrement en temps réel. On montrera que le système selon l'invention évite l'intervention des chaînes de télévision, intervention qui avait jusqu'à présent été un obstacle pour les précédents systèmes.

Dans les précédents systèmes, du fait de leur principes technologiques, la diffusion des codes numériques est à la charge des chaînes de télévision en ce qui concerne leurs propres émissions uniquement. Dans le système MOISE et VPV, la vidéographie diffusée, c'est-à-dire le système d'acquisition de données, est aussi à la charge de chaque chaîne.

Tous les précédents systèmes ne sont pas universels, du fait de leur principe même. Il n'existe aucune façon de contraindre toutes les chaînes de télévision d'utiliser l'un de ces systèmes.

La présente invention propose une autre approche pour résoudre le problème de l'activation en temps réel, du début de l'enregistrement d'une émission. L'invention propose un système général d'aide à la programmation qui peut être complété par un système universel de déclenchement en temps réel du début et de la fin des enregistrements.

La présente invention a pour objet un dispositif et procédé d'acquisition et de transmission de signaux spécialisés et de données entre un centre serveur et un appareil qui est capable de capter et d'enregistrer, d'une manière autonome, les émissions vidéo ou radio produites par les sociétés ou les organismes de radio ou de télévision.

L'appareil est donc composé d'un récepteur réglable avec une antenne (diffusion aérienne), ou un branchement (diffusion par câbles). On souligne que le centre serveur ne tient pas le rôle d'une banque de données audio ou vidéo connectée à un réseau à large bande passante. Dans ce dernier cas la notion même de programmation et de programmateur deviendrait sans objet. Les débits nécessaires sont d'un ordre de grandeur différent. De plus dans le procédé selon l'invention, l'appareil d'enregistrement n'est pas connecté au centre serveur lors du déroulement de l'enregistrement.

A titre d'exemple non limitatif, l'appareil de réception et d'enregistrement peut être un magnétoscope à cassettes, un

- 5 -

0179001

magnétophone, un système MAVICA d'enregistrement d'image vidéo, ou encore pourra être un disque laser numérique et effaçable.

Le système se compose de deux éléments en relation mutuelle: un système d'acquisition de données et d'aide à la programmation, ainsi que d'un système complémentaire de déclenchement en temps réel. Le dispositif d'acquisition de données comprend un centre serveur, un réseau interactif de transmission de données auquel est couplé un modem. Le modem est connecté au programmateur du magnétoscope grâce à une interface, ainsi qu'à un terminal avec un écran et un clavier.

Selon le dispositif et procédé de déclenchement en temps réel, les signaux et données, afférents aux débuts et fins de l'enregistrement des émissions produites par toutes les chaînes de télévision, sont diffusés sur un canal spécialisé à l'aide d'un centre indépendant d'observation des émissions. Les données qui ont été mises en mémoire dans le programmateur, pendant la programmation, sont utilisées pour identifier les codes diffusés de déclenchement relatifs aux émissions dont l'usager a fait le choix.

La présente invention sera mieux comprise à l'aide des dessins annexés:

La figure 1 représente le schéma de l'architecture générale du dispositif d'acquisition de données et du dispositif complémentaire de déclenchement en temps réel. Trois variantes de réalisation des éléments du dispositif afférent à chaque utilisateur y sont représentées suivant les cas d'un terminal simple, d'un terminal intégré ou d'un terminal intelligent.

La figure 2 représente un diagramme logique des composants de l'interface du programmateur, selon un mode de réalisation.

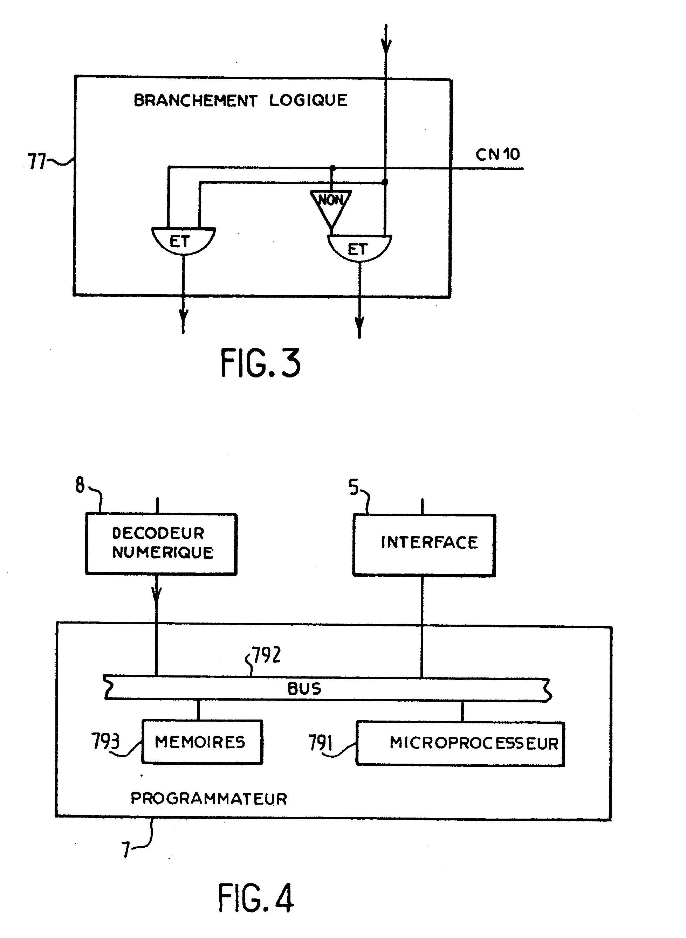

La figure 3 représente un élément de la figure 2.
La figure 4 représente un diagramme du programmateur et de l'interface, selon un autre mode de réalisation.

Le dispositif conforme à la présente invention comporte:
- un réseau (2) interactif de transmission de données;
- un ou plusieurs centres de traitement (1) spécialement étudiés, appelés aussi serveurs, qui sont reliés au réseau (2) de transmission de données, et qui possèdent en mémoire l'ensemble des instructions et codes décrivant les différents procédés de mise en oeuvre du dispositif ainsi que les données utiles.

Pour chaque utilisateur le dispositif comprend:
- un modem (3) qui est relié d'une manière directe ou indirecte au réseau (2);
- un terminal (4) comportant un dispositif d'affichage de données et un dispositif d'entrée de données, tels que par exemple un écran et un clavier; le terminal (4) étant connecté à une sortie du modem (3). Selon un mode de réalisation préférentiel, le terminal (4) est un terminal intégré de communication, comprenant un modem (30), un écran (32), un clavier (33) et une prise périphérique (31);
- un appareil (6) capable, d'une manière autonome, de capter et de procéder à un enregistrement des émissions des chaînes de télévision ou des stations de radio; l'appareil (6) comporte un programmateur (7). L'appareil (6) peut être un magnétoscope à cassette, un magnétophone avec un tuner, un lecteur/enregistreur de disque optique effaçable ou non;
- un organe intelligent (5) spécialement étudié, faisant fonction d'interface entre le programmateur (7), et le modem (3), ou la prise périphérique (31).

Il n'est nullement nécessaire que le dispositif comprenne plusieurs serveurs (1), et plusieurs réseaux (2). Un exemple réputé de terminal intégré de télécommunication est le MINITEL français, qui est utilisé dans le réseau TELETEL.

Le centre de traitement (1) est spécialement étudié en vue de cette application. Il comprend un processeur central et des éléments de mémoire principale ou auxiliaire.En mémoire sont stockés:

- l'ensemble des instructions d'ordinateur qui décrivent les différents procédés de mise en oeuvre du dispositif, ainsi que les codes (A) spéciaux qui vont permettrent le dialogue entre le centre (1) et l'interface (5).

- les codes (B1) du langage d'entrée de commande de l'interface (5) (7), ainsi que les codes (B2) du langage de sortie de données de l'interface (5). Il sera montré, plus loin, que les codes (B1) et (B2) peuvent être différents en raison de l'architecture de l'interface (5).

- la base de données (W) où sont mises les données informationnelles relatives aux programmes, pour les semaines à venir, des différentes chaînes de télévision, des chaînes de radio,ou de quelconque service qu'il soit possible d'enregistrer sur l'appareil (6). Les informations comprennent les caractéristiques telles que le numéro ou la fréquence de la chaîne, l'heure annoncée de début et de fin des émissions, ainsi que, dans le cadre d'une option très intéressante les codes (F) d'identification des codes (5) diffusés de déclenchement en temps réel. La définition de ce que constitue une émission est mise en oeuvre d'une manière indépendante par le centre serveur (1), ainsi il est possible de définir des émissions et des séquences que l'on ne trouve pas dans la presse.

Le dispositif décrit ci-dessus peut être mis en oeuvre pour aider l'usager à programmer son appareil (6) qui est le plus souvent un magnétoscope.

Une façon d'aider l'utilisateur est de rendre plus facile l'obtention des informations sur les émissions de télévision, ainsi que rendre quasiment simultanés, les processus de sélection et de programmation, sans opérations additionnelles.

L'usager peut accéder par le terminal (4) et le modem (3),
au centre serveur (1) et la base de donnée (W); ensuite
grâce à un logiciel de consultation de la base de données
(W), l'utilisateur pourra sélectionner les programmes de
télévision, radio et autres services, qu'il désire enregistrer. Les sélections devront être établies en tenant compte
qu'il n'est pas possible d'enregistrer plusieurs émissions
en même temps.L'utilisateur constitue ainsi un ensemble (w)
d'émissions qu'il désire enregistrer.

En premier lieu les codes spéciaux (A) vont permettre au
centre serveur (1), d'établir un dialogue avec l'interface
(5). A la réception des codes (A) l'interface (5) reconnaît
quand elle est adressée par le centre serveur (1). Comme
le programmateur (7) de l'appareil (6) constitue un type
d'appareil particulier, différent des appareils que l'on
s'attend à trouver connecté à un modem, il n'existe pas de
spécifications recommandées à ce sujet.

Selon un mode de réalisation préférentielle, à la réception de ces codes (A), l'interface (5) répond par un code
(A1) d'acquittement spécifique au centre serveur (1); à ce
moment-là, la liaison est établie. Pour diminuer les probabilités de faux adressages, on peut envisager un échange
supplémentaire de codes d'acquittement. Une autre solution
très simple, mais pas aussi sophistiquée et pratique, est
d'envoyer un message à l'usager, lui demandant de connecter
l'interface (5) avec le modem (3). Dans ce dernier cas, les
codes (A) constituent le texte du message, et un code d'acquittement peut être tapé par l'utilisateur.

A l'aide du centre serveur (1), la prochaine étape du procédé va consister ensuite à assembler et à combiner (opération T1):
- l'ensemble (w) et plus précisément les caractéristiques
des émissions choisies, c'est-à-dire les références des
chaînes, les heures prévues de début et fin des émissions,

**0179001**

ainsi qu'à titre d'option préférentielle des codes (F) d'identification;

- les codes (B1) du langage d'entrée qui commande l'interface (5) et le programmateur (7).

Le résultat du calcul (T1) est la série de codes (c) qui est envoyée à l'interface (5), au travers du réseau (2). De cette manière, le processus de programmation est achevé automatiquement. L'interface (5) envoie alors un code d'acquittement et demande alors au serveur (1) de libérer la communication.

Suivant chaque type d'interface (5) et de modèle de magnétoscope, les codes (B1), le calcul (T1) et le résultat (c) seront différents.

La série de codes (c) peut très bien avoir été préparée avant, ou pendant, la demande de communication entre le serveur (1) et l'interface (5).

Il est aussi possible de préparer le calcul en avance. Une fois toutes les semaines ou toutes les deux semaines, avec l'aide du centre serveur (1), une étapes préparatoire (opération T2) consiste à assembler et à combiner:

- La base de donnée (W) dans son intégralité, et plus précisément les caractéristiques de chaque émission, c'est-à-dire les références de chaque émission, les horaires prévus de début et de fin,ainsi que dans une option préférentielle les codes (F) d'identification.

- Les codes (B1) du langage d'entrée qui commande l'interface (5) et le programmateur (7).

Le résultat du calcul (T2) est l'ensemble (C) des codes qui peut alors être adjoint à la base de donnée (W).

Ensuite, dès que l'usager a sélectionné les émissions qu'il désire enregistrer, la seule opération consiste alors à extraire l'ensemble (w) et l'ensemble (c) comme sous
ensembles de (W).

Une caractéristique avantageuse de l'invention est que le
dispositif peut être mis en oeuvre pour lire et vérifier
quels sont les intitulés des émissions dont l'enregistrement a été prévu sur l'appareil (6).

A l'aide des codes (B1), la première étape du procédé est
de préparer (opération (T4) les codes de commande pour une
interrogation, de telle manière que l'interface (5) puisse
recevoir ou lire le contenu des mémoires du programmateur
(7). Ces ordres de commandes peuvent être préparés une fois
pour toutes, suivant chaque type de magnétoscope.

Après s'être connecté sur le centre serveur (1), l'usager
déclare au centre serveur qu'il désire lire les titres,
ainsi que d'autres informations au sujet des émissions dont
l'enregistrement a été prévu dans le magnétoscope (6).

Ensuite le centre serveur envoie les codes d'interrogation
à l'interface (5) par l'intermédiaire du réseau (2). L'interface (5) va alors lire les codes (d) contenus dans les
mémoires du programmateur (7). Une autre méthode est de
demander au programmateur (7) d'afficher les données et de
recevoir les données d'affichage.

L'interface (5) transmet ensuite les codes (d) par l'intermédiaire du réseau (2).

La prochaine étape du procédé (opération T5) est d'analyser
ou désassembler les codes (d), à l'aide des codes (B2) qui
constituent le langage des codes de sortie de l'interface
(5) et d'en extraire les horaires, date, fréquence ou canaux correspondants, ainsi que préférentiellement les codes
(F) d'identification des émissions dont l'enregistrement a
été prévu. Puis en scrutant la base de donnée (W), il sera

- 11 -

0179001

facile de retrouver les intitulés des émissions dont l'enregistrement a été prévu.

Ensuite, le centre serveur (1) envoie les titres et les autres informations afférentes, par l'intermédiaire du réseau (2), sur l'unité d'affichage telle qu'un écran (32) ou une imprimante. Au cas où il y aurait un chevauchement de deux émissions programmées pour être enregistrées en même temps, le serveur (1) envoie un avertissement à l'utilisateur.

Un cas particulier important est le cas où l'utilisateur ne dispose pas d'un simple terminal même du type MINITEL, mais d'un microordinateur (4) autonome équipé d'une unité centrale (41), d'une mémoire centrale, de mémoires auxiliaires (42) du type disquette et bientôt disque laser, ainsi qu'un module (43) d'entrée/sortie.

Les procédés de mise en oeuvre déjà décrits dans le cas d'un simple terminal sans intelligence locale s'appliquent en l'occurrence, mais d'autres procédés peuvent être utilisés pour mettre en oeuvre le dispositif lorsque l'usager bénéficie d'un terminal doté d'une capacité de traitement autonome.

Dans un terminal MINITEL, il y a un module écran (32), un module clavier (33), un module prise périphérique (31), et un module modem (3).

Il est possible de commander, à l'aide d'un langage protocole, depuis le centre serveur, les différentes combinaisons de liaisons entre les différents modules; ainsi le module modem peut être relié au module prise périphérique, il s'agit d'un simple aiguillage. Dans le cas d'un microordinateur, la procédure est différente, le modem intégré ou séparé est relié au bus du microordinateur, puis les données sont traitées par la CPU, et ensuite la CPU dirige

- 12 -

**0179001**

les données sur une carte d'entrée/sortie (43) et le module prise périphérique.

Une fois pour toutes, les codes (B1) afférents au magnétoscope (6) de l'usager, peuvent être chargés dans les mémoires (42). Une fois par semaine ou toutes les deux semaines, le centre serveur (1) charge la base de données (W) dans les mémoires (42) du microordinateur (4), de telle manière que le terminal intelligent (4) possède une copie (W') de la base de données (W), dans ses mémoires (42). Ensuite, déconnecté du serveur (1), le microordinateur (4) tient le rôle du centre serveur (1), vis-à-vis de l'interface (5).De cette façon, les deux procédés susdécrits d'acquisition de données pourront être adaptés.

Suivant un autre mode de réalisation, le serveur charge périodiquement la base de données (W) et les codes (C) adaptés au magnétoscope de l'utilisateur. Ensuite le microordinateur (4) tient le rôle du centre serveur (1) vis-à-vis de l'interface (5). Un seul des procédés susdécrits d'acquisition de données peut être alors adapté.

De même, une fois pour toutes, les codes (B2) peuvent être chargés dans les mémoires (42). Une fois par semaine ou toutes les deux semaines, le centre serveur (1) charge la base de données (W) dans les mémoires (42) du terminal intelligent (4). Ensuite le microordinateur (4), dans la mise en oeuvre du procédé de lecture et de vérification, tient le rôle du centre serveur (1) vis-à-vis de l'interface (5).

En réalité, l'intérêt économique de tels procédés n'est pas évident, à moins que l'utilisateur ne passe un temps très long à effectuer son choix.Le temps, écoulé à choisir, peut être inférieur au temps nécessaire au chargement de la totalité de la base de données (W). De plus, les constructeurs de magnétoscopes peuvent être réticents à laisser les codes (B1) et (B2) à la disposition de bricoleurs.

0179001

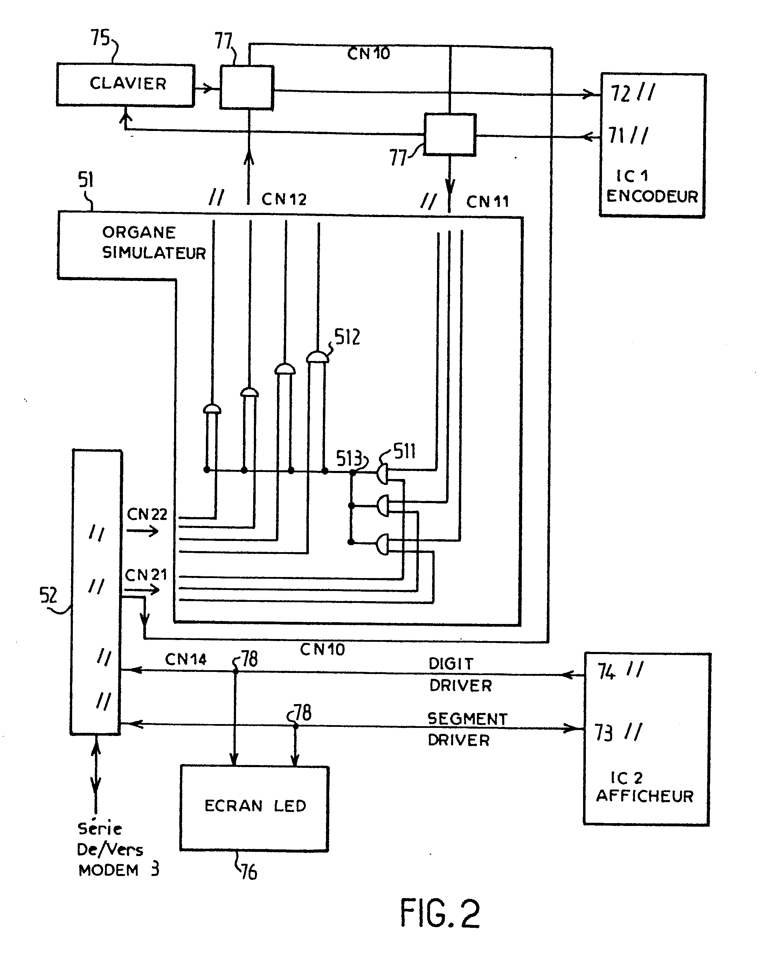

Un mode de réalisation de l'interface (5) est maintenant
décrit à l'aide des dessins (Fig. 2) représentant seulement
un mode d'exécution.

Actuellement, la plupart des encodeurs de claviers, dits
encodeurs multiplexeurs, sont fondés sur le principe suivant: les différentes touches du clavier sont repérées dans
la matrice de représentation du clavier par leurs coordonnées ligne  et  colonne; l'encodeur (IC1) possède un port
d'entrée (72) et un port  de  sortie (71); pour connaître
quelle touche a été actionnée, l'encodeur consulte son port
de sortie et détermine dans quelle colonne la touche a été
actionnée, et génère suivant son horloge, un signal d'entrée (STROBE), qui va scruter  dans quelle ligne la touche
a été actionnée. A la fin de cette routine d'inspection,
l'encodeur (IC1) du clavier connaît la ligne et la colonne
de la touche actionnée et l'a ainsi identifiée.

Un mode de réalisation au niveau de l'interface (5) et de
l'organe (7), va consister à disposer sur les ports (71) et
(72) de l'encodeur (IC1), un ensemble d'aiguillages logiques (77) qui vont diriger les signaux provenant du port
(71),à travers un ensemble de portes logiques dont les fermetures et les ouvertures vont simuler l'activation d'une
touche dans la matrice de représentation du clavier, vers
le port (72).

Donc, il est nécessaire d'aiguiller les ports d'entrée (72)
et de sortie (71) non pas vers le clavier (75) mais vers
l'organe (51) simulateur.Les éléments (77) tiennent le rôle
d'aiguillage.

Selon  un  exemple non limitatif de réalisation de cet aiguillage, les éléments (77) sont constitués de portes logiques ET et NON. Suivant l'état logique du fil CN10, le port
de sortie est connecté soit au clavier (76) ou bien à l'organe (51) simulateur.

Une fois que les ports (71) et (72) de l'encodeur du clavier sont connectés sur l'organe simulateur (51), l'organe simulateur (51) peut recevoir de la part du serveur (1), par le câble CN21, les coordonnées correspondant à la ligne de la touche que l'on veut simuler l'actionnement, et par le câble CN22, les coordonnées correspondant à la colonne de ladite touche. L'organe (51) ne laissera passer que le signal d'entrée sur CN11 correspondant à la ligne choisie, et ne laissera sortir que le signal de sortie sur CN12 correspondant à la ligne choisie. L'organe (51) comprendra si nécessaire, un dispositif de synchronisation avec l'horloge de l'encodeur (IC1).

Selon un mode de réalisation pris comme exemple non limitatif, l'organe émulateur (51) de clavier comprend:

- Le câble CN11 composé de fils parallèles connectés au port de sortie (71).

- Le câble CN21 composé de fils parallèles connectés à un port de l'UART (52); l'ensemble des valeurs logiques de chaque fil décrit les coordonnées de la colonne.

- Le câble CN22 composé de fils parallèles connectés à un port de l'UART (52); l'ensemble des valeurs logiques de chaque fil décrit les coordonnées de la rangée.

- Une série de portes ET (511); les deux entrées de chaque porte sont respectivement un fil du câble CN11 et un fil de câble CN21; les sorties de chaque porte sont rassemblées en un fil unique (513).

- Une série de portes ET (512); les deux entrées de chaque porte sont respectivement le fil unique (513) et un fil du câble CN22; les sorties de chaque porte sont connectées respectivement à chaque fil du câble parallèle CN12.

- Le câble CN12 connecté au port de sortie (72).

- Un organe de conversion parallèle/série (52) tel qu'un UART ou un USART, qui assure la conversion des données parallèles reçues sur ses ports parallèles et les données en série provenant du modem (3) et du centre serveur (1).

Ainsi le signal synchronisé d'exploration des lignes,venant de l'encodeur (IC1), par le câble CN11, ne passera que suivant la valeur des états logiques des différents fils pour la colonne et la rangée dont les coordonnées ont été téléchargées par le serveur (1).

Une variante équivalente de ce dernier mode de réalisation est de remplacer les portes logiques ET (511) par des portes OU précédées et suivies de portes NON, d'après les lois de MORGAN.

Les codes (B1) sont alors constitués de toutes les coordonnées des touches sur la matrice du clavier (75), associées à la fonction de chaque touche.

Le calcul (T1) et (T2) dans ce mode de réalisation particulièrement avantageux, consiste à assembler une suite de codes à partir des codes (B1), simulant le déroulé opératoire manuel que doit suivre un utilisateur qui se sert du clavier (75) pour procéder à la programmation des enregistrements des émissions.

Toujours, selon un mode de réalisation particulièrement avantageux, pour que l'utilisateur puisse lire et vérifier quelles sont les émissions dont l'enregistrement a été programmé, il est possible d'ajouter les organes suivants:
- Le magnétoscope doit posséder un écran d'affichage (76) commandé par un afficheur (IC2) ou circuit intégré contrôlant l'affichage.
- Des connexions (78) sur les ports (73) et (74) de l'afficheur (IC2). Ces connexions sont permanentes ou sont activées par le fil CN10.
- Des câbles parallèles CN13 ou CN14, à un bout desquels se trouvent les connexions (78) et à l'autre bout se trouvent les ports parallèles de l'UART (52).

Le centre serveur (1) prépare (opération T4) les codes de commande d'interrogation qui simulent le processus opératoire manuel sur le clavier. Ensuite le serveur envoie ces
codes à l'organe simulateur (51). En réponse à cette interrogation, l'afficheur (IC2) du tableau d'affichage (76) de
l'organe (7) de l'appareil (6), va afficher les caractéristiques: canaux, horaires des émissions dont l'enregistrement a été programmé. Grâce aux connexions (78), l'interface (5) va reconnaître les codes (d) envoyés vers le
tableau d'affichage (76), puis va les envoyer vers le serveur (1) à travers le réseau. Les codes (B2) vont àlors
correspondre aux codes utilisés par le tableau d'affichage
(76).

Très souvent l'afficheur (IC2) est un afficheur multiplexeur et le système d'affichage est un système LED ou à
cristaux liquides. L'afficheur comprend alors deux ports de
sortie: le port (73) SEGMENT DRIVER correspondant aux codes
LED (généralement 7 ou 9 segments) d'un caractère, le port
(74) DIGIT DRIVER correspondant aux coordonnées de l'emplacement où est affiché le caractère. Les codes (B2), dans
cet exemple, comprendront principalement les codes LED,
compte tenu s'il y a lieu de la position d'affichage décrite par les données transmises par le port (74).

Ce mode particulièrement simple de réalisation au niveau de
l'interface (5) présente l'avantage de n'exiger que des
modifications mineures du programmateur (7), mais le temps
de transmission peut être un peu long.

Il y a également un mode très différent de réalisation de
l'interface (5).

En effet, de plus en plus dans l'électronique grand public
future, le programmateur (7) ou TIMER possède un ou plusieurs bus, assurant la liaison entre des microprocesseurs
et autres composants.Le ou les lus peuvent avoir une structure parallèle ou série. Un bon exemple de bus série est le
bus I2C.

Le programmateur (7) comprend dans ce cas:

- Un ou plusieurs microprocesseurs (791).

- Un ou plusieurs bus (792).

- Des mémoires (793) où sont stockées les données afférentes aux caractéristiques des émissions telles que la date, l'heure, la chaîne, et à titre d'option préférentielle les codes (F) d'identification.

L'interface (5) comprend une connexion parallèle ou série sur le bus parallèle ou série (792).

Il peut y avoir un circuit spécialisé qui assure le transfert de données entre le bus (792) et le modem (3) ou le microordinateur (4). Le format de la liaison avec le modem (3) ou le terminal (4) intégré de télécommunication de type MINITEL, ou encore le microordinateur (4), peut être par exemple la norme MINITEL peu coûteuse et aux niveaux TTL, ou la norme V24 ou encore un bus domestique tel que le D2B. Selon une autre solution, le traitement des données peut être assuré par un des microprocesseurs existants dont le logiciel a été modifié et augmenté.

Dans ce cas, les codes (B1) et B2) sont composés à l'aide des instructions du microprocesseur du programmateur (7).

Un mode de réalisation de la liaison entre l'interface (5) et le modem (3) ou le microordinateur (4) consiste en une télécommande à l'aide d'ondes infrarouges. On peut également songer à utiliser des ondes radio ou des ondes ultrasonores. Quelques magnétoscopes possèdent une télécommande par infrarouge de la fonction de programmation. Cependant ce n'est pas une liaison bidirectionnelle à moins d'ajouter respectivement un autre récepteur et un autre émetteur.

Le dispositif de déclenchement en temps réel, adjoint au système susdécrit d'acquisition de données, comprend les éléments additionnels suivants:

- 18 -

0179001

- un ou plusieurs centres (11) de diffusion de données numériques. Cette diffusion est réalisée notamment soit concurremment à la diffusion d'une émission de TV ou radio, soit indépendamment en plein canal. Cette diffusion est assurée notamment par l'intermédiaire d'une radiodiffusion ou encore notamment par des câbles. Un seul centre de diffusion peut suffire. Pour les émetteurs terrestres, l'utilisation de l'intervalle de suppression de trame semble la plus courante. Sur une même ressource de diffusion de donnée numérique, il est possible, par multiplexage temporel ou paquet, de faire passer plusieurs canaux de diffusion numérique.

Le système français DIDON et le système nord-américain NABTS utilisent un multiplexage par paquets, soit pendant l'intervalle de suppression de trame d'une diffusion d'émissions vidéo, soit encore en plein canal.

- Un centre (11) diffuse des codes (E) qui signalent le déclenchement ou l'arrêt de l'enregistrement des émissions programmées. Cette diffusion est effectuée sur un seul canal (U), en ce qui concerne un territoire donné. En bref, il y a un seul canal (U) pour toutes les chaînes.

- Un ou plusieurs centres (12) surveillent le moment effectif du déclenchement du début et de la fin des émissions de télévision et de radio. Le centre (12) est connecté au centre (11) par l'intermédiaire d'un réseau ou par une ligne téléphonique dédiée. Le centre (12) d'observation est relié avec le centre serveur (1) qui fournit les caractéristiques de chaque émission. Un mode de réalisation de ce centre d'observation, consiste, en une pièce du centre serveur où seront rassemblés autant de téléviseurs qu'il y a de chaînes, sur le territoire à surveiller. Du personnel surveillant regarde en permanence le déroulement des émissions. Devant chaque surveillant, il y a un terminal d'ordinateur. Le titre de la prochaine émission est affiché

- 19 -

**0179001**

sur l'écran du terminal, et les codes (E) de déclenchement afférents à cette émission sont mis en mémoire. A chaque fois qu'une émission débute, le surveillant appuie sur une touche du terminal d'ordinateur qui transmet le code (E) de l'émission, au centre (11) pour diffusion immédiate. Avec un magnétoscope à cassette,quand une émission va commencer, il est nécessaire également de diffuser un autre code (E) pour préparer la bande sur la tête HF. Pour des raisons de commodités, le centre (12) sera voisin du centre serveur (1) et partagera son matériel.

- Il est nécessaire que la base de données (W) possède les codes (F) spécifiques relatifs aux émissions des semaines à venir. Les codes (F) et (E) sont définis par le centre (1), et non pas par les chaînes TV ou radio. Les codes (E) et (F) sont des codes privés et internes réservés à l'usage de ceux qui consultent le centre serveur (1). Les codes (F) vont permettre au programmateur (7) du magnétoscope d'identifier les codes diffusés (E) de déclenchement relatifs aux émissions programmées.

- L'appareil (6) de chaque utilisateur possède un décodeur numérique (8) capable de recevoir et de décoder les codes (E).

- Le programmateur (7) de l'appareil (6) est connecté à la sortie du décodeur numérique (8). Le programmateur (7) est capable,après réception d'un code (E) provenant du décodeur numérique (8), d'identifier si ledit code (E) est afférent à une émission programmée. L'identification est faite à l'aide des codes (F) qui ont été préalablement chargés par le centre serveur (1), par l'intermédiaire de l'interface (5). Le programmateur (7), après une identification positive du code (E), commande le début ou l'arrêt du processus d'enregistrement.

Selon un mode de réalisation préférentielle, par exemple en France, chaque susdit territoire peut être la région où les chaînes nationales ont les mêmes fréquences.La taille d'une région est limitée par la puissance des émetteurs terrestres. Avec un satellite, un seul canal (U) peut embrasser un pays européen tout entier ou aux Etats-Unis toute une côte.

S'il y a seulement un décodeur numérique (8) en aval du récepteur existant normal (61), alors seul le déclenchement du début de l'enregistrement est possible en temps réel. S'il y a un décodeur numérique (8) en aval d'un récepteur supplémentaire (9) captant le canal (U), alors les déclenchements du début, des interruptions, et de l'arrêt de l'enregistrement, sont possibles en temps réel. Il est possible aussi d'utiliser un récepteur multifréquences à balayage, en lieu et place du récepteur existant (61) et du récepteur supplémentaire (9).

Dans le cas d'une implantation en France, un mode de réalisation préférentielle utilise la technologie de diffusion de données DIDON. Le centre de diffusion (11) inclut un point d'accès DIDON. Le point d'accès DIDON est relié au centre d'observation (12), par l'intermédiaire du réseau télématique TRANSPAC ou par une ligne de téléphone. En France la technologie DIDON est mise en place par TDF. Des circuits intégrés pour DIDON sont disponibles chez PHILIPS, THOMSON et TEXAS INSTRUMENTS.

En Amérique du Nord la diffusion de données numériques peut être effectuée suivant les normes OSI de transport niveaux 1 à 4 du NABTS. C'est identique à DIDON. N'importe quel émetteur de télévision peut servir d'hôte à l'équipement de diffusion numérique.L'équipement supplémentaire ne requiert que peu de modifications dans l'émetteur existant, de plus le coût est peu élevé. Pour mettre en oeuvre un mode de réalisation préférentielle avec le canal (U) unique, il est seulement suffisant de trouver un émetteur de télévision ou même de radio pour tout un territoire ou région.

Avant de mettre en place le système de déclenchement en temps réel, il est nécessaire de mettre en place le dispositif d'acquisition de données précédemment décrit, de telle manière que le procédé de mise en oeuvre du dispositif de déclenchement en temps réel comprenne les opérations supplémentaires suivantes, qui doivent s'ajouter aux opérations des différents procédés susdécrits d'acquisition:

- Périodiquement, toutes les deux semaines ou plus, compte tenu de combien de temps à l'avance les programmes des émissions de télévision ou de radio sont connus, le procédé comprend les opérations additionnelles suivantes:

1. Un code (E) est défini pour chaque émission TV ou radio des semaines à venir. La définition des codes (E) ainsi que le découpage des programmes TV ou radio en différentes émissions s'effectue en totale indépendance par le centre d'observation (12). Ainsi, il sera possible de rescinder une émission en une série de sous-ensembles ou séquences. Dans un magazine, l'utilisateur pourra sélectionner uniquement les séquences qui l'intéressent ou bien éliminer les séquences publicitaires.

2. Pour chaque code (E), un code d'identification (F) est défini, ce code (F) permettant au programmateur (7) d'identifier le code (E) relatif à une émission donnée de télévision ou de radio. La définition des codes (F) s'effectue en totale indépendance par le centre (12) d'observation.

3. Les codes (F) d'identification sont adjoints aux caractéristiques des susdites émissions et séquences, dans la base de données (W). Dans un mode de réalisation, le centre (1) et le centre (12) partagent les mêmes ordinateurs.

- A chaque fois que l'utilisateur consulte le centre (1) ou le terminal (4) autonome préalablement chargé par le serveur (1), en vue de programmer les émissions qu'il désire enregistrer sur son magnétoscope:

4. Il sera nécessaire d'inclure, dans l'ensemble des codes (c) envoyés vers l'interface (5) et le programmateur (7), les codes (F) d'identification. C'est uniquement à l'aide des codes (F), que le programmateur (7) peut identifier les codes (E) diffusés.
- d'une manière permanente, aussi longtemps qu'il y a une émission de télévision ou de radio en cours. Par exemple en France, en ce qui concerne les émissions de télévision, le centre d'observation fonctionnerait de 8 à 1 H. du matin, aux Etats-Unis il devrait fonctionner 24H/24H.

5. Le personnel du centre d'observation (12) surveille le déroulement effectif des programmes TV ou radio. Les surveillants détectent le début, la fin ou encore une interruption de chaque émission TV ou radio.

6. Lorsque le début ou la fin d'une émission est détecté, le personnel de surveillance transmet au centre (11) de diffusion le code (E) afférent à ladite émission TV ou radio. Le centre (11) diffuse immédiatement le code (E).

7. Après réception et identification d'un code (E) à l'aide d'un code (F) afférent à une émission programmée, le programmateur (7) commande le début de l'enregistrement, et à titre d'option, le programmateur (7) commande également la fin de l'enregistrement.

Selon un mode de réalisation les codes (E) afférents à une émission sont diffusés d'une manière permanente, durant toute la durée de ladite émission. Les codes (E) peuvent contenir une mise à jour des heures de début et de fin de l'émission. Selon une autre solution, les codes (E) peuvent contenir un simple identificateur; le magnétoscope (6) ne procède alors à un enregistrement d'une émission que s'il reçoit en permanence les codes (E) relatifs à cette émission. Ces deux solutions ne sont probablement pas les meilleures, car elles sont coûteuses en ressource de diffusion.

Dans un mode de réalisation préférentielle, chaque code (E) est diffusé uniquement lors du début de l'interruption ou de la fin d'une émission.Chaque code (E) est éventuellement répété plusieurs fois, par exemple dix fois pour assurer une bonne réception.

Selon un mode de réalisation, lorsque le magnétoscope (6) ne dispose pas d'un récepteur supplémentaire (9) de données numériques ou n'a pas la possibilité de capter deux canaux en même temps, le procédé de déclenchement en temps réel de l'enregistrement est le suivant:

- Le récepteur (61) de l'appareil (6) est en écoute sur un canal (U) soit d'une manière permanente ou seulement à partir de l'heure prévue de l'émission à enregistrer ou un peu avant.

- Le décodeur numérique (8) reçoit et trie tous les codes qui arrivent, puis transmet au programmateur (7) tous les codes numériques du canal (U). Lorsqu'à l'aide d'un code (F) en mémoire, le programmateur (7) identifie le code (E) afférent au début d'une émission programmée, le récepteur (61) se règle automatiquement sur le canal correspondant à l'émission qui débute. Le magnétoscope commence son enregistrement.

- L'arrêt de l'enregistrement ne s'effectue que d'après la durée prévue de l'émission. En option cette durée prévue peut être remise à jour au dernier moment, grâce au contenu du code (E) relatif au début de ladite émission.

Dans un mode de réalisation, lorsque le magnétoscope (6)

- 24 -

0179001

possède un récepteur supplémentaire (9) de données numériques ou a la possibilité de capter deux canaux en même temps, grâce par exemple à un récepteur multifréquences à balayage, le procédé de déclenchement en temps réel de l'enregistrement est le suivant:

- Le récepteur supplémentaire (9) de l'appareil (6) est en écoute sur un canal (U) soit d'une manière permanente ou seulement à partir de l'heure prévue de l'émission à enregistrer ou un peu avant.

- Le décodeur numérique (8) reçoit et trie tous les codes qui arrivent, puis transmet au programmateur (7) tous les codes numériques du canal (U). Lorsqu'à l'aide d'un code (F) en mémoire, le programmateur (7) identifie le code (E) afférent au début d'une émission programmée, le magnétoscope commence son enregistrement, à l'aide du récepteur (61). Le récepteur supplémentaire (9) reste en écoute sur le canal (U).

- à la réception sur le canal (U) d'un code (E) relatif à l'interruption d'une émission en cours d'enregistrement, l'appareil (6) cesse d'enregistrer. Le récepteur supplémentaire (9) reste en écoute sur le canal (U).
- à la réception éventuelle sur le canal (U) d'un code relatif à la fin de l'interruption de l'émission, l'appareil (6) reprend son enregistrement. Le récepteur supplémentaire (9) reste en écoute sur le canal (U).
- à la réception sur le canal (U) d'un code (E) signalant la fin de l'émission, l'appareil (6) cesse son enregistrement, le récepteur supplémentaire (9) arrête éventuellement son écoute, le magnétoscope se débranche.

Si le magnétoscope est connecté à un autre récepteur d'un autre appareil domestique (par exemple: un téléviseur), qu'il ne peut cependant utiliser tout le temps, il est possible d'envisager la combinaison suivante:

- Lorsque l'usager n'utilise pas l'autre appareil (ex. TV), le processus d'enregistrement se déroule comme s'il y avait un récepteur supplémentaire.

- Lorsque l'usager utilise l'autre appareil (ex. TV), le processus d'enregistrement se déroule avec l'aide uniquement du récepteur existant.

C'est une solution attrayante au point de vue économique, mais la mise en marche de l'autre appareil (ex. TV) doit pouvoir être télécommandée par le programmateur (7) du magnétoscope.

Selon un exemple de réalisation, dans le cas où l'appareil (6) est un magnétoscope à cassettes, il est nécessaire d'envoyer, avant de commencer à enregistrer, un code (E) "prêt-à-enregistrer" de manière à préparer la bande magnétique devant la tête HF.

Si le magnétoscope (6) possède un récepteur supplémentaire, alors si dans un cas deux émissions se déroulent en même temps sur deux chaînes différentes en suivant les indications horaires prévues, ou si dans un autre cas il y a un risque que deux émissions se déroulent en même temps au cas où la première émission est légèrement en retard, il est possible de définir un schéma de gestion de priorité:

- Lorsque, à l'aide du système susdécrit d'acquisition de données, l'utilisateur programme les émissions qu'il désire enregistrer, il définit dans le cadre des codes (F), un niveau de priorité pour chaque émission susceptible de chevauchement.

- Si lors de l'enregistrement d'une première émission, le récepteur supplémentaire (9) reçoit un code (E) afférent au début d'une autre émission qui a été programmée, alors le programmateur (7) compare les niveaux de priorité définis dans le code (F) de la première et de la seconde émission. Si le niveau de priorité de la seconde émission est plus élevé, alors le magnétoscope arrête l'enregistrement en cours et commence à enregistrer ladite seconde émission. Si le degré de priorité de la seconde émission est inférieur ou égal, dans ce cas le magnétoscope continue d'enregistrer la première émission. Dans un mode sophistiqué de réalisation, le programmateur (7) peut conserver en mémoire le fait de commencer à enregistrer la seconde émission dès que la première est terminée.

A titre de possibilité optionnelle, il est possible de diffuser des codes (E) aux heures prévues de début d'une émission, lorsque l'émission aurait dû commencer. Ces codes (E) seraient relatifs à un acquittement de l'heure prévue de l'émission. Le programmateur (7), s'il ne reçoit pas les codes (E) d'acquittement, effectue le contrôle du processus d'enregistrement de la manière traditionnelle. Cependant, la fiabilité n'en sera pas améliorée, parce qu'il est beaucoup plus probable que l'horloge du programmateur (7) ne soit pas à l'heure plutôt que la diffusion de données numériques ne fonctionne pas. On ajoutera que si pour une raison quelconque, le centre (12) d'observation ne surveille pas une chaîne locale ou peu connue de télévision ou de radio, alors lorsque l'utilisateur consulte le centre serveur (1), les programmes de ces chaînes ne sont pas affichés. Aucun code (F) n'est chargé et l'usager en est averti. Il n'y a aucun malentendu puisque le système d'acquisition de données et le système de déclenchement en temps réel sont étroitement liés. L'usager a toujours la possibilité d'enregistrer une émission desdites chaînes avec le procédé traditionnel horaire.

Selon un mode de réalisation préférentiel, un code (E) comprend deux champs de données:
- Un identificateur, numérique ou alphanumérique, de l'émission programmée,

- 27 -

**0179001**

- Un descripteur fonctionnel décrivant les fonctions suivantes d'un code (E) : prêt-à-enregistrer (pour magnétoscopes à cassettes),début,interruption, fin-d'interruption, arrêt, acquittement-horaire-prévu (option).

A titre d'option, la durée prévue et mise à jour de l'émission peut être adjointe au code (E) avec la fonction de début, de telle manière qu'elle puisse être utilisée par des magnétoscopes munis d'un seul récepteur.

Un code (F) comprend deux champs de données:
- un identificateur de ladite émission,
- en option, un descripteur fonctionnel décrivant les fonctions suivantes: niveau de priorité, non-intégration-des-interruptions. Si le mode non-intégration-des-interruptions est activé, les codes (E) afférents aux interruptions de ladite émission sont ignorés.

Le dispositif et procédésproposés offrent un avantage réel à l'usager. De plus, les constructeurs de magnétoscopes peuvent mettre en place le système rapidement, facilement, à peu de frais et d'une manière indépendante.

Note: MAVICA est un système fabriqué par SONY
TRANSPAC, TELETEL, PERITEL, MINITEL sont des dénominations P.T.T.
EPEOS, MOISE sont des dénominations du C.C.E.T.T.
DIDON, ANTIOPE sont des dénominations T.D.F.
CEEFAX est un système britannique de diffusion de données
N.A.B.T.S. (North American Broadcast Teletex Specifications) est une norme de diffusion de données au Canada et aux USA
VIDEOTEX est une norme de vidéographe interactive définie par le C.C.I.T.T. (certaines vidéographies diffusées sont compatibles avec la définition des attributs de visualisation du VIDEOTEX)

- 28 -

V.P.S. (Video Programming System) est un système de déclenchement diffusé des chaînes ARD/ZDF allemandes.
I2C et D2B sont des standards de bus série proposés par RTC
et PHILIPS.

REVENDICATIONS

1. Dispositif d'acquisition et de transmission, entre un appareil (6) d'enregistrement du son et/ou des images, et un centre serveur (1), de codes spéciaux relatifs à la programmation, caractérisé en ce qu'il comporte:

- un réseau (2) interactif de transmission de données auquel est relié le centre serveur (1);

- un centre serveur (1) disposant en mémoire des codes (A) permettant d'établir une liaison entre l'interface intelligente (5) et ledit centre serveur (1);

- ledit centre serveur (1) disposant en mémoire des codes (B1) du langage d'entrée de commandes et des codes (B2) du langage de sortie de données de l'interface intelligente (5);

- ledit centre serveur (1) disposant en mémoire d'une base de données (W) contenant les caractéristiques afférentes aux émissions des semaines à venir; lesdites caractéristiques pouvant notamment comprendre les canaux, les horaires, et en option les codes (F) d'identification des codes diffusés (E) de déclenchement en temps réel;

- ledit centre serveur (1) disposant en mémoire des ensembles d'instructions décrivant les différents procédés de mise en oeuvre du dispositif;

- pour chaque utilisateur, un terminal (4) comprenant des moyens d'acquisition de données, des moyens d'affichage de données, et une connexion avec le modem (3);

- pour chaque utilisateur, des moyens (6) pour capter et enregistrer d'une manière indépendante, des sons et/ou des images diffusées par des chaînes de télévision ou de radio; lesdits moyens (6) comprenant notamment un programmateur (7);

- pour chaque utilisateur, une interface intelligente (5), reliant le programmateur (7) avec le modem (3) ou le terminal (4).

2. Dispositif selon la revendication 1, caractérisé en ce qu'il comporte les éléments complémentaires suivants:

- des moyens (11) de diffusion de données numériques, diffusant des codes (E) afférents au déclenchement en temps réel de l'enregistrement des émissions produites par les installations de télévision ou de radio, ladite diffusion étant effectuée sur un canal (U) spécifique pour une région donnée;

- des moyens (12) d'observation du temps réel du début et de la fin de chaque émission de télévision ou de radio, que la diffusion soit aérienne ou par câble;

- des liaisons entre les moyens (11) de diffusion de données numériques, et les moyens (12) d'observation;

- des liaisons entre les moyens (12) d'observation et le centre serveur (1);

- les codes (F) afférents à chaque émission des semaines à venir, ces codes (F) permettant d'identifier les codes diffusés numériques (E) afférents à chaque émission, lesdits codes (F) étant inclus dans la base de données (W);

- pour chaque utilisateur, des moyens de réception et de décodage des codes numériques (E) diffusés sur le canal (U);

- pour chaque utilisateur, un programmateur (7) relié à la sortie desdits moyens de réception et de décodage numérique;

- pour chaque utilisateur, un programmateur (7) disposant de mémoires où sont stockés les codes (F) d'identification des émissions programmées;

- pour chaque utilisateur, un programmateur (7) capable de commander le début et l'arrêt du processus d'enregistrement, après avoir reçu un code (E) numérique identifié à l'aide dudit code (F) d'identification.

3. Dispositif selon la revendication 2, caractérisé en ce que lesdits moyens de réception et de décodage numérique comportent un décodeur numérique (8) connecté en sortie du récepteur existant (61) déjà inclus dans lesdits moyens (6) d'enregistrement et de réception d'émissions vidéo ou audio, le récepteur existant (61) ne pouvant capter deux émissions simultanément.

4. Dispositif selon la revendication 2, caractérisé en ce que lesdits moyens de réception et de décodage numérique comportent un décodeur numérique (8) connecté en sortie de moyens de réception pouvant capter en même temps le canal (U) et une autre émission audio ou vidéo sur un autre canal.

5. Dispositif selon l'une quelconque des revendications 1 à 4, caractérisé en ce que le terminal (4) comporte une capacité de traitement autonome et de mémorisation, tout en étant déconnecté du centre serveur (1).

6. Dispositif selon l'une des revendications 1 à 5, caractérisé en ce que l'interface (5) comporte, selon une énumération non limitative, des moyens pour capter et pour émettre soit des ondes électromagnétiques, et spécifiquement des ondes infrarouges, ou soit des ondes ultrasonores.

7. Dispositif selon l'une quelconque des revendications 1 à 6, caractérisé en ce que ladite interface intelligente (5) comporte selon une énumération non limitative:
- des branchements logiques (77) sur le port de sortie (71) et sur le port d'entrée (72) de l'encodeur (IC1) du clavier (75) du programmateur (7); ce port (71) se connectant à un câble en parallèle (CN11) et le port (72) se connectant à un câble en parallèle (CN12), lesdits branchements logiques étant activés par un câble (CN10);
- un circuit (51) émulateur ou simulateur du clavier (75) comportant un port d'entrée connecté au câble (CN11) et un port de sortie connecté au câble (CN12), ainsi que deux ports d'entrée connectés aux câbles (CN21) et (CN22); le circuit (51) ne permettant l'entrée que sur les fils de (CN11) correspondant aux états logiques binaires des fils du câble (CN21) et ne permettant la sortie que sur les fils de (CN12) correspondant aux états logiques binaires des fils du câble (CN22);
- un organe (52) de conversion transmission parallèle/ transmission série connecté aux câbles parallèles (CN21) et (CN22), et connecté par une liaison série au modem (3) ou au terminal (4);

8. Dispositif selon la revendication 7, caractérisé en ce que le circuit (51) émulateur ou simulateur comporte:
- le câble (CN11) qui est constitué par des fils parallèles connectés au port de sortie (71);
- le câble (CN21) qui est constitué par des fils parallèles connectés à un port parallèle de l'organe (52), l'ensemble des valeurs logiques de chaque fil décrivant les coordonnées de la colonne;
- le câble (CN22) qui est constitué par des fils parallèles connectés à un autre port parallèle de l'organe (52), l'ensemble des valeurs logiques de chaque fil décrivant les coordonnées de la ligne;
- un ensemble de portes logiques ET (511) dont les deux entrées de chaque porte ET est respectivement un des fils du câble (CN11), et un des fils du câble (CN21), et dont les sorties des portes ET sont connectées à un unique fil (513);
- un ensemble de portes logiques ET (512) dont les deux entrées de charque porte ET est respectivement le fil unique (513) et un des fils du câble (CN22), et dont les sorties des portes ET sont connectées, respectivement, à chaque fil du câble parallèle (CN12);
- le câble (CN12) connecté au port de sortie (72).

9. Dispositif selon l'une quelconque des revendications 7 ou 8, caractérisé en ce que ladite interface intelligente (5) comporte selon une énumération non limitative:
- des connexions (78) sur les ports (73) et (74) de l'afficheur (IC2), lesdites connexions (78) étant permanentes ou étant activées par le câble (CN10);

- 33 -

0179001

- des câbles parallèles (CN13) et (CN14) reliés aux connexions (78) et à des ports parallèles de l'organe de conversion (52).

10. Dispositif selon l'une quelconque des revendications 1 à 6, caractérisé en ce que le programmateur (7) comporte selon une énumération non limitative:
- un ou plusieurs microprocesseurs (791);
- un ou plusieurs bus (792);
- des mémoires (793) où sont stockés les données afférentes aux émissions programmées.

11. Procédé de mise en oeuvre d'un dispositif selon l'une quelconque des revendications 1 à 10, caractérisé en ce qu'il consiste à:
- établir une liaison entre le centre serveur (1) et l'interface intelligente (5) à l'aide des codes d'adressage (A);
- lire le sous-ensemble (w) de la base de données (W); ledit sous-ensemble (w) décrivant les caractéristiques de la sélection d'émissions dont l'enregistrement est programmé;
- préparer et assembler (opération T1) les codes (c) de commande de l'interface (5) et du programmateur (7), avec l'aide des codes (B1), les codes (c) de commande étant afférents audit sous-ensemble (W);
- transmettre les codes (c), en passant par le réseau (2), à l'interface (5) par l'intermédiaire du modem (3).

12. Procédé de mise en oeuvre d'un dispositif selon l'une quelconque des revendications 1 à 10, caractérisé en ce qu'il consiste à:
- lire périodiquement toute la base de données (W), et à assembler (opération T2) l'ensemble (C) des codes de commande, à partir des codes (B1), lesdits codes de commande étant afférents à chaque émission dans la base de données (W), chaque élément de l'ensemble (C) étant adjoint à chaque élément correspondant dans la base de données (W);

- établir une liaison entre le centre serveur (1) et l'interface intelligente (5) à l'aide des codes d'adressage (A);

- lire dans la base de données (W) le sous-ensemble (w) et son sous-ensemble adjoint (c) de codes de commande; ledit sous-ensemble (w) décrivant les caractéristiques de la sélection d'émissions dont l'enregistrement est programmé;

- transmettre les codes (c), en passant par le réseau (2), à l'interface (5) par l'intermédiaire du modem (3).

13. Procédé de mise en oeuvre d'un des dispositifs selon l'une quelconque des revendications 1 à 10, caractérisé en ce qu'il consiste à:

- établir une liaison entre le centre serveur (1) et l'interface intelligente (5) à l'aide des codes d'adressage (A);

- envoyer des codes de commande à l'interface (5) de telle façon que le programmateur (7) lise le contenu (d) de ses mémoires où sont stockées les caractéristiques des émissions dont l'enregistrement est programmé;

- transmettre le contenu (d) au centre serveur (1);

- désassembler le contenu des données (d), à l'aide des codes (B2) et de la base de données (W);

- extraire un sous-ensemble (w) décrivant les caractéristiques des émissions programmées;

- transmettre vers le terminal (4) pour visualisation le sous-ensemble (w).

14. Procédé selon l'une quelconque des revendications 11, 12 ou 13, pour la mise en oeuvre du dispositif selon la revendication 5, caractérisé en ce qu'il comporte l'étape supplémentaire suivante:

- télécharger la base de données (W) sur le terminal autonome (4), périodiquement depuis le centre serveur (1), ledit terminal autonome téléchargé (4) tenant le rôle du centre serveur (1) dans les étapes suivantes des procédés.

15. Procédé selon l'une quelconque des revendications 11, 12 ou 14, pour la mise en oeuvre du dispositif selon l'une des revendications 2, 3, 4 ou 5, caractérisé en ce qu'il consiste à effectuer les opérations supplémentaires suivantes:

- une fois par période:

- définir un code (E) de déclenchement en temps réel du début et de l'arrêt pour chaque émission de la période;

- définir un code (F) d'identification afférent à chaque code (E) diffusé, le code (F) permettant d'identifier ledit code (E);

- mettre les codes (F) d'identification en mémoire dans la base de données (W) du centre serveur (1), avec les caractéristiques d'une émission;

- A chaque fois que l'usager consulte le centre (1) ou le terminal (4) autonome:

- inclure les codes (F) d'identification dans l'ensemble des codes (c) envoyés à l'interface (5);

- d'une manière permanente:

- observer les moment réels de début ou d'arrêt de chaque émission;

- transmettre et diffuser, sur le canal (U), les codes (E) afférentss au début ou à l'arrêt des émissions sous observations;

- commander la marche et l'arrêt des moyens (6) d'enregistrement après réception et identification d'un code (E) à l'aide d'un code (F) afférent à une émission programmée.

16. Procédé selon la revendication 15, pour la mise en oeuvre du dispositif selon la revendication 3, caractérisé en ce que la commande de la marche de l'arrêt des moyens (6) d'enregistrement consiste à:

- recevoir, trier et transmettre les codes du canal (U) au programmateur (7);

- identifier un code diffusé (E) afférent à une émission programmée avec un code (F) d'identification placé en mémoire;

- régler les moyens (6) de réception sur la chaîne où est diffusé l'émission qui débute;

- enregistrer ladite émission;

- finir l'enregistrement à l'aide uniquement de la durée prévue de l'émission;

17. Procédé selon la revendication 15, pour la mise en oeuvre du dispositif selon la revendication 4, caractérisé en ce que la commande de la marche de l'arrêt des moyens (6) d'enregistrement consiste à:

- recevoir, trier et transmettre les codes du canal (U) au programmateur (7);

- identifier un code diffusé (E) afférent à une émission programmée avec un code (F) d'identification placé en mémoire;

- continuer de recevoir sur le canal (U) et dans le même temps commencer de capter la chaîne où est diffusée l'émission qui débute;

- enregistrer ladite émission;

- interrompre le processus d'enregistrement, après réception d'un code (E) d'interruption identifié à l'aide d'un code (F) afférent à ladite émission;

- continuer l'écoute sur le canal (U);

- reprendre le processus d'enregistrement, après réception d'un code (E) de fin d'interruption afférent à ladite émission;

- arrêter le processus d'enregistrement, après réception d'un code (E) d'arrêt afférent à la fin de ladite émission.

18. Procédé selon l'une des revendications 15, 16 ou 17, caractérisé en ce que le code (E) comprend les champs de données suivants:

- un identificateur de l'émission;

- un champ fonctionnel décrivant les fonctions suivantes: prêt-à-enregistrer (pour magnétoscope à cassettes), début, interruption, fin d'interruption, arrêt, acquittement-horaire-prévu (option), durée prévue (option);

et en ce que le code (F) comprend les champs de données suivants:

- un identificateur de l'émission;
- en option un champ fonctionnel décrivant: un niveau de priorité, un mode de non-intégration-des-interruptions.

FIG.1

FIG.2

3/3

0179001

FIG.3

FIG.4